# FASCICULE DE BREVET EUROPEEN

(11) **EP 1 160 640 B1**
(45) Date de publication et mention de la délivrance du brevet: **08.02.2006**
(21) Numéro de dépôt: 01460038.1
(22) Date de dépôt: 30.05.2001
(51) Int. Cl.: G05D 23/19, G08C 17/02, H04Q 9/00

(54) **Procédé de configuration d'un dispositif de régulation de chauffage à commande à distance**
Verfahren zur Konfiguration einer ferngesteuerten Heizregelvorrichtung
Process for configuring a remote controlled heating regulation device

(30) Priorité: 02.06.2000 FR 0007090
(43) Date de publication de la demande: 05.12.2001
(73) Titulaire: DELTA DORE Société Anonyme, F-35270 Combourg (FR)
(72) Inventeur: Roger, Alain, 35270 Cuguen (FR); Raffray, Patrick, 35120 Hirel (FR)
(74) Mandataire: Maillet, Alain

(56) Documents cités:
- EP-A- 0 735 516
- FR-A- 2 712 405
- US-A- 5 499 512
- US-A- 5 874 903

## Description

La présente invention concerne un procédé de configuration d'un dispositif de régulation de chauffage à commande à distance. Un dispositif de régulation de chauffage à commande à distance plus particulièrement visé par la présente invention est une chaudière commandée par un thermostat programmable qui peut être installé à distance de la chaudière.

Est bien connu le fait de mettre en oeuvre, pour un dispositif de régulation de chauffage, un procédé de régulation qui permet de réguler la température en fonction, par exemple, d'une température de consigne.

Est également bien connu le fait d'utiliser un dispositif de commande de type thermostat pour effectuer une telle régulation.

Dans certains cas, il est intéressant de pouvoir déplacer le dispositif de commande par rapport au dispositif de chauffage commandé. Ainsi, il a été proposé différents dispositifs permettant une commande à distance d'un dispositif de chauffage.

Par exemple, la demande internationale WO 88/02511 décrit un thermostat pourvu d'un émetteur destiné à émettre un signal radio pouvant être capté par un récepteur qui émet un signal électrique correspondant de commande d'un appareil de chauffage électrique. La demande de brevet européen EP 0 635 812 A1 décrit un dispositif de commande de chaudière comprenant un capteur d'ambiance qui utilise une transmission radio pour envoyer une information de température vers un récepteur dont une sortie commande la mise en route de la chaudière. Le dispositif de commande comprend un moyen de sélection de température de consigne et un moyen d'affichage de température.

Est également connu le fait d'associer à des données de valeurs de mesure ou de commande des données d'identification d'une commande à distance. Ainsi, dans la demande internationale WO 90/14563 une unité de commande de type portative comprend un dispositif de codage des données à transmettre. Dans la demande de brevet européen EP 0 591 704 A2, un signal d'émission est transmis en tant que télégramme de données numériques qui comprend des données d'adresse spécifiques à l'émetteur et au récepteur et des données de valeurs de mesure. Dans la demande de brevet européen précitée EP 0 635 812 A1, un codage unique identifie le capteur émetteur.

La communication entre le dispositif de commande à distance et un dispositif récepteur est assurée par des protocoles de communication qui peuvent être relativement compliqués. II convient de s'assurer notamment que les différents éléments de communication peuvent correctement s'identifier.

Le document EP-A-735 516 décrit un dispositif de régulation de chauffage à commande à distance, ledit dispositif de régulation de chauffage à commande à distance comprenant un dispositif de chauffage associé à un moyen de communication et un dispositif de commande à distance, ledit moyen de communication et ledit dispositif de commande à distance comprenant des moyens d'émission et de réception de signaux radio adaptés à échanger des informations de commande et des informations d'identification suivant un protocole de communication donné. Dans ce document, il est prévu un procédé de configuration qui comprend une étape de mise en relation d'un récepteur et d'un émetteur par une liaison radio de manière à ce que ledit émetteur transmette une information d'identification audit récepteur ainsi qu'une étape d'enregistrement par ledit récepteur de ladite information d'identification transmise par ledit émetteur.

Dans ce document EP-A-735 516, à l'installation du système, le récepteur est installé et configuré, puis des boutons sont pressés de manière faire entrer le récepteur dans un mode apprentissage. Ensuite, l'émetteur est mis en marche, ce qui a pour effet d'envoyer un bit d'apprentissage dans le message de commande (il ne le fait qu'un nombre limité de fois). Lorsqu'il est dans le mode apprentissage et qu'il reçoit le bit d'apprentissage ainsi que deux fois le même code de produit (équivalent de l'information d'identification), le récepteur prend en compte en le mémorisant ce code produit. Après quoi, le récepteur quitte le mode d'apprentissage.

Cette procédure peut s'avérer assez fastidieuse à mettre en oeuvre pour l'utilisateur, notamment parce qu'elle nécessite l'action sur deux boutons. Le risque également d'une telle méthode de configuration est l'occurrence d'une action inopinée sur les deux boutons (le fait qu'ils soient deux permet de diminuer ce risque), ce qui refait passer le récepteur en mode d'apprentissage, ce qui, d'une part, n'est pas nécessaire et, d'autre part, peut perturber le fonctionnement correct du système.

Le but de la présente invention est de résoudre ce problème.

A cet effet, l'invention prévoit un procédé de configuration tel qu'il vient d'être décrit en relation avec le document EP-A-735 516 mais dont les caractéristiques sont celles qui sont mentionnées dans la partie caractérisante de la revendication 1.

Des caractéristiques secondaires de l'invention font l'objet des revendications dépendantes de la revendication 1.

Ces caractéristiques de l'invention apparaîtront plus clairement à la lecture de la description suivante d'un exemple de réalisation, ladite description étant faite en relation avec les dessins joints parmi lesquels :
La Fig. 1 représente de manière schématique un dispositif de régulation de chauffage à commande à distance,
La Fig. 2 représente de manière schématique des étapes d'un procédé de configuration selon la présente invention du dispositif de la Fig.1; et
La Fig. 3 représente de manière schématique d'autres étapes du procédé de la Fig. 2.

Globalement, un procédé de configuration d'un dispositif de régulation de chauffage à commande à distance selon la présente invention s'applique à un dispositif de régulation de chauffage à commande à distance comprenant un dispositif de chauffage associé à un moyen de communication et un dispositif de commande à distance.

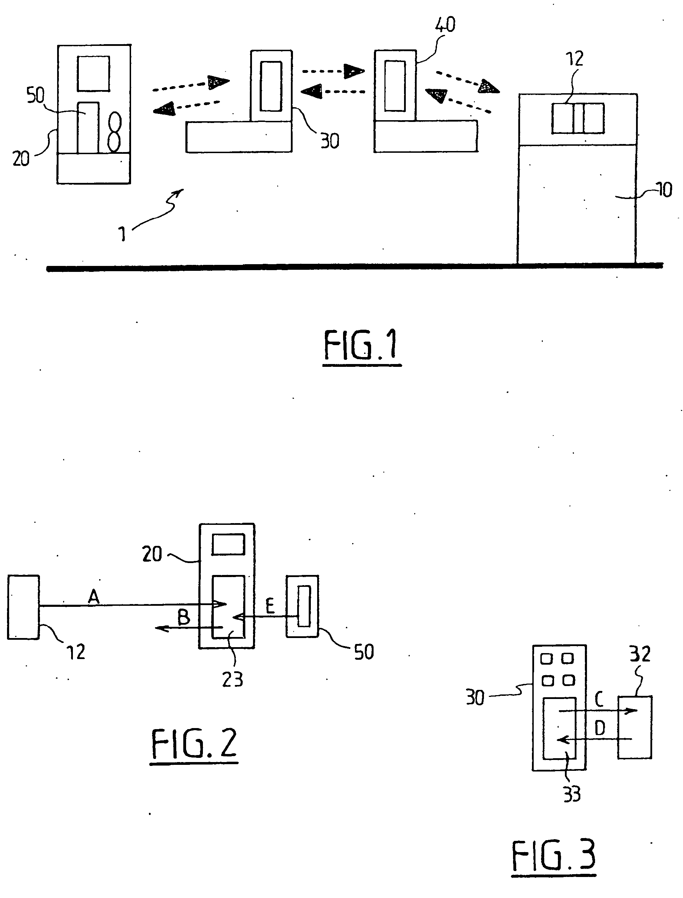

Par exemple, il peut s'appliquer au dispositif de régulation de chauffage 1 décrit sur la Fig. 1.

Globalement, le dispositif de régulation de chauffage 1 comprend une chaudière à commande électronique 10, un transmetteur 12, deux répéteurs 30 et 40 et un thermostat automatique programmable 20.

La commande électronique de la chaudière 10 est pilotée par le transmetteur 12 qui est lui même commandé par le thermostat automatique programmable 20 avec lequel il est en liaison radio. Ainsi que le montrent les flèches sur la Fig. 1, la liaison entre le thermostat automatique programmable 20 et le transmetteur 12 est une liaison bidirectionnelle à l'alternat (semiduplex).

Ainsi qu'il est bien connu, les répéteurs 30 et 40 reçoivent et réémettent les signaux afin d'assurer une bonne qualité de transmission. Ces répéteurs 30 et 40 sont facultatifs. Ils ne sont mis en oeuvre que pour des conditions de transmission difficiles. Bien entendu, un seul répéteur peut être utilisé.

Le transmetteur 12 est installé sur la chaudière 10 de manière à être connecté électriquement à un module de commande (non représenté) de cette chaudière. Selon un aspect de la présente invention, le transmetteur 12 peut être désolidarisé de la chaudière 10 et il peut être installé sur le thermostat automatique programmable 20 de manière à être raccordé électriquement à ce dernier. Par exemple, le transmetteur 12 peut être installé sur la chaudière 10 ou sur le thermostat automatique programmable 20 à l'aide d'un dispositif d'enclipsage, le raccordement électrique se faisant à l'aide d'une connexion à broches. Ainsi qu'on le voit sur la Fig. 2, un emplacement 23 prévu pour accueillir le transmetteur 12 sur le thermostat automatique programmable 20 peut également accueillir un module d'affichage mobile 50 enclipsable et pouvant être raccordé électriquement au thermostat automatique programmable 20 à l'aide d'une connexion à broches.

De même, l'emplacement (non représenté) prévu pour accueillir le transmetteur 12 sur la chaudière 10 peut également accueillir le module d'affichage mobile 50, le raccordement électrique se faisant également à l'aide d'une connexion à broches. Ainsi qu'on le voit sur la Fig. 3, un répéteur 30 est pourvu d'un module mobile 32 enclipsable dans un emplacement 33 et raccordé électriquement au répéteur à l'aide d'une connexion à broches. Ce module mobile 32, de même dimension que le transmetteur 12 peut également être installé dans l'emplacement 23 du thermostat automatique programmable 20, le raccordement électrique se faisant également à l'aide d'une connexion à broches.

Chaque répéteur comprend un dispositif d'affectation de numéro de répéteur commandé par un commutateur.

Globalement, ces différents éléments de communication comprennent chacun des moyens connus d'émission et de réception de signaux radio adaptés à échanger des informations de commande et des informations d'identification suivant un protocole de communication donné.

Plus particulièrement, le thermostat automatique programmable 20 comporte un module émetteur/récepteur maître et le transmetteur 12 et les répéteurs 30 et 40 comportent chacun un module émetteur/récepteur esclave. Les données d'information sont structurées en trames. Chaque trame est constituée d'une succession de bits organisés en champs logiques. Typiquement, une trame peut comprendre d'abord des champs de synchronisation qui, encadrant la trame, ont pour objet une synchronisation du récepteur au niveau du.bit tout en écartant la partie utile de la trame des phases de démarrage et d'arrêt de l'émetteur pendant lesquelles les bits transmis peuvent être altérés. La trame comprend également des champs de début de trame et de fin de trame, généralement de taille un octet, permettant de détecter le début et la fin de la trame et de synchroniser le récepteur au niveau de l'octet. Un champ d'adresse émetteur permet d'identifier l'élément qui émet sur la ligne. Il peut s'agir du thermostat automatique programmable 20, du transmetteur 12, d'un répéteur 30 ou 40 ou de tout autre élément de communication intervenant éventuellement dans le dispositif de communication.

Ainsi, tous les éléments de communication sont renseignés sur la provenance de l'information portée par une trame donnée. Un champ d'adresse destinataire permet d'identifier le destinataire final d'une trame. Il peut s'agir soit du thermostat automatique programmable 20, soit du transmetteur 12. Un champ de vérification contient, par exemple, une valeur correspondant à une combinaison des octets utiles de la trame, de manière à pouvoir procéder à une vérification de l'intégrité de la trame transmise, ainsi qu'il est bien connu. Un champ d'informations de commande regroupe les données de commande du dispositif de régulation de chauffage. Ce champ correspond donc aux données circulant sur une liaison filaire entre le thermostat automatique programmable et la chaudière lorsque ces derniers sont raccordés électriquement, c'est-à-dire lorsqu'on se passe de la liaison radio. Ce champ comprend généralement des sous-champs d'identification caractérisant, par exemple la taille de l'information contenue, l'émetteur et le destinataire, et un sous-champ contenant l'information de commande proprement dite. La taille de ce dernier sous-champ peut varier, selon l'information qu'il contient. L'émetteur et le destinataire peuvent être une unité de traitement de base, intervenant au niveau de la chaudière 10, une unité de traitement d'affichage, intervenant au niveau du module d'affichage 50 ou une unité de traitement de thermostat, intervenant au niveau du thermostat automatique programmable 20. Le destinataire d'une information de commande peut être également l'ensemble de ces trois unités.

Selon l'invention, les informations d'identification comprennent une adresse système. Pour une trame telle que décrite précédemment, cette adresse système est contenue dans un champ d'adresse système de la trame. Cette adresse système est destinée à empêcher les interactions entre deux installations voisines.

Selon l'invention, l'adresse système est délivrée par le thermostat automatique programmable 20 lors de la phase de mise en service à tous les éléments installés.

Par exemple, dans un mode de réalisation de la présente invention dans lequel chaque trame a une longueur variant entre 11 et 19 octets selon la quantité d'information de commande contenue, l'adresse système peut être inscrite dans un champ logique de 16 bits, permettant 65536 combinaisons.

Globalement, un procédé de configuration selon l'invention du dispositif de régulation de chauffage qui vient d'être décrit comprend une étape de mise en contact électrique du transmetteur 12 et du thermostat automatique programmable 20, le thermostat automatique programmable 20 transmettant alors électriquement l'adresse système au transmetteur 12, et une étape d'enregistrement de l'adresse système par le transmetteur 12.

La Fig. 2 montre un exemple de réalisation d'un procédé de configuration selon l'invention. Les flèches représentent différentes étapes du procédé de configuration.

Au moment de la production, l'adresse système est enregistrée dans l'unité de traitement du thermostat automatique programmable 20. A l'installation, le transmetteur 12 est installé dans l'emplacement 23 du thermostat automatique programmable 20 (étape A). Une fois le contact électrique établi, l'unité de traitement du thermostat 20 va reconnaître le transmetteur 12 et va automatiquement lui transmettre les données constitutives de l'adresse système. A son tour, le transmetteur 12 va reconnaître ces données et va les enregistrer en tant qu'adresse système. Une fois le transfert de données effectué, le transmetteur 12 est désolidarisé du thermostat 20 (étape B) et installé dans l'emplacement correspondant (non représenté) de la chaudière 10, à la place du module d'affichage mobile 50. Enfin, le module d'affichage mobile est installé dans l'emplacement 23 du thermostat 20 (étape E). Le système est alors fonctionnel.

Lorsque le système de communication utilisé comprend des éléments répéteurs, le procédé de configuration est modifié de la manière suivante, en référence aux figs. 2 et 3.

Après que le transmetteur 12 a été retiré de l'emplacement 23 (étape B), la partie mobile 32 du répéteur 30 est retirée de l'emplacement 33 (étape C) et installée dans l'emplacement 23. Une fois le contact électrique établi, l'unité de traitement du thermostat 20 va reconnaître la partie mobile 32 du répéteur 30 et va automatiquement lui transmettre les données constitutives de l'adresse système. A son tour, la partie mobile 32 du répéteur 30 va reconnaître ces données et va les enregistrer en tant qu'adresse système. Une fois le transfert de données effectué, la partie mobile 32 du répéteur 30 est désolidarisé du thermostat 20 et installée dans l'emplacement 33 du répéteur 30 (étape D). Le commutateur de sélection de numéro de répéteur est alors placé sur la position répéteur 1. La même opération est reproduite pour le répéteur 40, à la différence que, après l'étape D, le commutateur de sélection de numéro de répéteur est placé sur la position répéteur 2. Enfin, le module d'affichage mobile est installé dans l'emplacement 23 du thermostat 20 (étape E). Le système est alors fonctionnel.

Avantageusement, le procédé de configuration comprend également une étape d'affichage de l'adresse système.

## Revendications

1. Procédé de configuration d'un dispositif de régulation de chauffage à commande à distance, ledit dispositif de régulation de chauffage à commande à distance (1) comprenant un dispositif de chauffage (10) associé à un moyen de communication (12) et un dispositif de commande à distance (20), ledit moyen de communication (12) et ledit dispositif de commande à distance (20) comprenant des moyens d'émission et de réception de signaux radio adaptés à échanger des informations de commande et des informations d'identification suivant un protocole de communication donné, ledit procédé de configuration comprenant une étape de mise en relation dudit moyen de communication (12) et dudit dispositif de commande (20) à distance de manière à ce que ledit dispositif de commande à distance (20) transmette une information d'identification audit moyen de communication (12), et une étape d'enregistrement par ledit moyen de communication (12) de ladite information d'identification transmise par ledit moyen de commande à distance (20), **caractérisé en ce que** ladite étape de mise en relation dudit moyen de communication (12) et dudit dispositif de commande (20) à distance est une étape de mise en contact électrique et **en ce qu'**il inclut une étape de reconnaissance par ledit dispositif de commande (20) dudit moyen de communication (12) lorsque l'un est en contact électrique avec l'autre, ladite étape de reconnaissance précédant ladite étape de transmission de ladite information d'identification.

2. Procédé de configuration d'un dispositif de régulation de chauffage à commande à distance selon la revendication 1, **caractérisé en ce qu'**il comprend également une étape d'affichage de ladite information d'identification.

3. Procédé de configuration d'un dispositif de régulation de chauffage à commande à distance selon la revendication 1 ou 2, **caractérisé en ce qu'**il comprend également une étape de mise en contact électrique dudit dispositif de commande à distance (20) et d'au moins un moyen répéteur (30, 40), ledit dispositif de commande à distance (20) transmettant alors électriquement ladite information d'identification audit mayen répéteur (30, 40), et une étape d'enregistrement par ledit moyen répéteur (30, 40) de ladite information d'identification transmise par ledit moyen de commande à distance (20).

4. Procédé de configuration d'un dispositif de régulation de chauffage à commande à distance selon la revendication 3, **caractérisé en ce qu'**il comprend également une étape d'attribution d'un numéro de répéteur audit moyen répéteur (30, 40).

5. Procédé de configuration d'un dispositif de régulation de chauffage à commande à distance selon l'une quelconque des revendications précédentes, **caractérisé en ce que** ledit moyen de communication (12) peut être désolidarisé dudit dispositif de chauffage (10) et raccordé audit moyen de commande à distance (20).

6. Procédé de configuration d'un dispositif de régulation de chauffage à commande à distance selon l'une quelconque des revendications précédentes, **caractérisé en ce que** ledit moyen répéteur (30, 40) peut être raccordé audit moyen de commande à distance (20).

7. Procédé de configuration d'un dispositif de régulation de chauffage à commande à distance selon l'une quelconque des revendications précédentes, **caractérisé en ce que** le raccordement dudit moyen de communication (12) audit dispositif de commande à distance (20) entraîne automatiquement la transmission électrique de ladite information d'identification audit moyen de communication (12).

8. Procédé de configuration d'un dispositif de régulation de chauffage à commande à distance selon l'une quelconque des revendications précédentes, **caractérisé en ce que** le raccordement dudit moyen répéteur (30, 40) audit dispositif de commande à distance (20) entraîne automatiquement la transmission électrique de ladite information d'identification audit moyen répéteur (30, 40).

9. Procédé de configuration d'un dispositif de régulation de chauffage à commande à distance selon l'une quelconque des revendications précédentes, **caractérisé en ce que** ledit dispositif de chauffage (10) comprend un organe de raccordement permettant le raccordement amovible dudit moyen de communication (12) et ledit dispositif de commande à distance (20) comprend également un organe de raccordement (23) permettant le raccordement amovible dudit moyen de communication (12).

10. Procédé de configuration d'un dispositif de régulation de chauffage à commande à distance selon la revendication 9, **caractérisé en ce que** le raccordement dudit moyen de communication (12) sur ledit organe de raccordement (23) dudit dispositif de chauffage (10) ou dudit dispositif de commande à distance (20) se fait par enclipsage.

11. Procédé de configuration d'un dispositif de régulation de chauffage à commande à distance selon la revendication 9 ou 10, **caractérisé en ce que** ledit organe de raccordement (23) dudit dispositif de commande à distance (20) permet de raccorder ledit dispositif de commande à distance (20) alternativement audit moyen de communication (12) ou audit moyen répéteur (30, 40).

12. Procédé de configuration d'un dispositif de régulation de chauffage à 5 commande à distance selon l'une quelconque des revendications 9 à 11, **caractérisé en ce que** ledit organe de raccordement (23) dudit dispositif de commande à distance (20) peut alternativement être raccordé à un moyen d'affichage (50).

13. Procédé de configuration d'un dispositif de régulation de chauffage à commande à distance selon la revendication 1, **caractérisé en ce que** ledit organe de raccordement dudit dispositif de chauffage (10) peut alternativement être raccordé audit moyen d'affichage (50).

14. Procédé de configuration d'un dispositif de régulation de chauffage à commande à distance selon la revendication 13, **caractérisé en ce que**, après ladite étape d'enregistrement de ladite information d'identification, ledit moyen de communication est déconnecté dudit dispositif de commande à distance (20) puis raccordé audit dispositif de chauffage (10) tandis que ledit moyen d'affichage (50) est déconnecté dudit dispositif de chauffage (10) puis raccordé audit dispositif de commande à distance (20).

15. Procédé de configuration d'un dispositif de régulation de chauffage à commande à distance selon l'une quelconque des revendications précédentes, **caractérisé en ce que** ledit dispositif de chauffage (10) est une chaudière à commande électronique et ledit dispositif de commande à distance (20) est un thermostat programmable.

## Claims

1. Method for configuration of a remote control heating regulating device, said remote control heating regulating device (1) comprising a heating device (10) associated with a means of communication (12) and a remote control device (20), said means of communication (12) and said remote control device (20) comprising means for transmission and reception of radio signals adapted to exchange control information and identification information according to a given communication protocol, said method of configuration comprising a step for establishing contact between said means of communication (12) and said remote control device (20) so that said remote control device (20) transmits identification information to said means of communication (12), and a step for recording by said means of communication (12) of said identification information transmitted by said remote control device (20), **characterised in that** said step for establishing contact between said means of communication (12) and said remote control device (20) is a step for establishing electrical contact and **in that** it includes a step for recognition by said remote control device (20) of said means of communication (12) when one is in electrical contact with the other, said recognition step preceding said step for transmission of said identification information.

2. Method for configuration of a remote control heating regulating device according to claim 1, **characterised in that** it also comprises a step for displaying said identification information.

3. Method for configuration of a remote control heating regulating device according to claim 1 or 2,
**characterised in that** it also comprises a step for establishing electrical contact between said remote control device (20) and at least one repeater means (30, 40), said remote control device (20) then transmitting said identification information electrically to said repeater means (30, 40), and a step for recording by said repeater means (30, 40) of said identification information transmitted by said remote control means (20).

4. Method for configuration of a remote control heating regulating device according to claim 3, **characterised in that** it also comprises a step for assignment of a repeater number to said repeater means (30, 40).

5. Method for configuration of a remote control heating regulating device according to any one of the preceding claims, **characterised in that** said means of communication (12) can be detached from said heating device (10) and connected to said remote control means (20).

6. Method for configuration of a remote control heating regulating device according to any one of the preceding claims, **characterised in that** said repeater means (30, 40) can be connected to said remote control means (20).

7. Method for configuration of a remote control heating regulating device according to any one of the preceding claims, **characterised in that** the connection of said means of communication (12) to said remote control device (20) automatically entails electrical transmission of said identification information to said means of communication (12).

8. Method for configuration of a remote control heating regulating device according to any one of the preceding claims, **characterised in that** the connection of said repeater means (30, 40) to said remote control device (20) automatically entails electrical transmission of said identification information to the repeater means (30, 40).

9. Method for configuration of a remote control heating regulating device according to any one of the preceding claims, **characterised in that** said heating device (10) comprises a connection element allowing detachable connection of said means of communication (12), and said remote control device (20) also comprises a connection element (23) allowing detachable connection of said means of communication (12).

10. Method for configuration of a remote control heating regulating device according to claim 9, **characterised in that** the connection of said means of communication (12) to said connection element (23) of said heating device (10) or said remote control device (20) is effected by clipping it in place.

11. Method for configuration of a remote control heating regulating device according to claim 9 or 10,
**characterised in that** said connection element (23) of said remote control device (20) allows the connection of said remote control device (20) alternatively to said means of communication (12) or to said repeater means (30, 40).

12. Method for configuration of a remote control heating regulating device according to any one of claims 9 to 11,
**characterised in that** said connection element (23) of said remote control device (20) can alternatively be connected to a means of display (50).

13. Method for configuration of a remote control heating regulating device according to claim 1, **characterised in that** said connection element of said heating device (10) can alternatively be connected to said means of display (50).

14. Method for configuration of a remote control heating regulating device according to claim 13, **characterised in that** after said step for recording of said identification information, said means of communication is disconnected from said remote control device (20) then connected to said heating device (10) whereas said means of display (50) is disconnected from said heating device (10) then connected to said remote control device (20).

15. Method for configuration of a remote control heating regulating device according to any one of the preceding claims, **characterised in that** said heating device (10) is an electronically controlled boiler and said remote control device (20) is a programmable thermostat.

## Patentansprüche

1. Verfahren zur Konfiguration einer ferngesteuerten Heizregelvorrichtung, wobei die ferngesteuerte Heizregelvorrichtung (1) eine Heizvorrichtung (10) umfasst, die mit einem Kommunikationsmittel (12) und einer Fernsteuervorrichtung (20) verbunden ist, wobei das Kommunikationsmittel (12) und die Fernsteuervorrichtung (20) Mittel zum Senden und Empfangen von Radiosignalen umfassen, die in der Lage sind, Steuerinformationen und Identifikationsinformationen gemäß einem gegebenen Kommunikations-Protokoll auszutauschen, wobei das Verfahren zur Konfiguration eine Stufe des Inbeziehungsetzens von Kommunikationsmittel (12) und Fernsteuervorrichtung (20) umfasst, so dass die Fernsteuervorrichtung (20) eine Identifikationsinformation an das Kommunikationsmittel (12) überträgt, und eine Stufe des Aufzeichnens der Identifikationsinformation durch das Kommunikationsmittel (12), welche durch das Fernsteuermittel (20) übertragen worden ist, **dadurch gekennzeichnet, dass** die Stufe des Inbeziehungsetzens von Kommunikationsmittel (12) und Fernsteuervorrichtung (20) eine Stufe zur Herstellung des elektrischen Kontaktes ist, und dass es eine Stufe zur Erkennung des Kommunikationsmittels (12) durch die Steuervorrichtung (20) einschließt, wenn diese untereinander elektrisch verbunden sind, wobei die Erkennungsstufe der Stufe zur Übertragung der Identifikationsinformation vorangeht.

2. Verfahren zur Konfiguration einer ferngesteuerten Heizregelvorrichtung nach Anspruch 1, **dadurch gekennzeichnet, dass** es auch eine Stufe zur Anzeige der Identifikationsinformation umfasst.

3. Verfahren zur Konfiguration einer ferngesteuerten Heizregelvorrichtung nach Anspruch 1 oder 2, **dadurch gekennzeichnet, dass** es auch eine Stufe zur Herstellung eines elektrischen Kontaktes der Fernsteuervorrichtung (20) und wenigstens einem Verstärkermittel (30, 40) umfasst, wobei die Fernsteuervorrichtung (20) dann die Identifikationsinformation elektrisch an das Verstärkermittel (30, 40) überträgt, sowie eine Aufzeichnungsstufe der Identifikationsinformation durch das Verstärkermittel (30, 40), welche durch das Fernsteuermittel (20) übertragen worden ist.

4. Verfahren zur Konfiguration einer ferngesteuerten Heizregelvorrichtung nach Anspruch 3, **dadurch gekennzeichnet, dass** es auch eine Stufe zur Zuordnung einer Verstärkemummer zu dem Verstärkermittel (30, 40) umfasst.

5. Verfahren zur Konfiguration einer ferngesteuerten Heizregelvorrichtung nach einem der vorangehenden Ansprüche, **dadurch gekennzeichnet, dass** das Kommunikationsmittel (12) von der Heizvorrichtung (10) lösbar und an das Fernsteuermittel (20) anschließbar ist.

6. Verfahren zur Konfiguration einer ferngesteuerten Heizregelvorrichtung nach einem der vorangehenden Ansprüche, **dadurch gekennzeichnet, dass** das Verstärkermittel (30, 40) an das Fernsteuermittel (20) angeschlossen werden kann.

7. Verfahren zur Konfiguration einer ferngesteuerten Heizregelvorrichtung nach einem der vorangehenden Ansprüche, **dadurch gekennzeichnet, dass** das Anschließen des Kommunikationsmittels (12) an die Fernsteuervorrichtung (20) automatisch die elektrische Übertragung der Identifikationsinformation an das Kommunikationsmittel (12) auslöst.

8. Verfahren zur Konfiguration einer ferngesteuerten Heizregelvorrichtung nach einem der vorangehenden Ansprüche, **dadurch gekennzeichnet, dass** das Anschließen des Verstärkermittels (30, 40) an die Fernsteuervorrichtung (20) automatisch die elektrische Übertragung der ldentifikationsinformation an das Verstärkermittel (30, 40) auslöst.

9. Verfahren zur Konfiguration einer ferngesteuerten Heizregelvorrichtung nach einem der vorangehenden Ansprüche, **dadurch gekennzeichnet, dass** die Heizvorrichtung (10) eine Anschlussvorrichtung umfässt, welche das lösbare Anschließen des Kommunikationsmittels (12) erlaubt, und dass die Fernsteuervor-richtung (20) ebenfalls eine Anschlussvorrichtung (23) umfasst, welche das lösbare Anschließen des Kommunikationsmittels (12) erlaubt.

10. Verfahren zur Konfiguration einer ferngesteuerten Heizregelvorrichtung nach Anspruch 9, **dadurch gekennzeichnet, dass** das Anschließen des Kommunikationsmittels (12) an die Anschlussvorrichtung (23) der Heizvorrichtung (10) oder der Fernsteuervorrichtung (20) durch Einklipsen erfolgt.

11. Verfahren zur Konfiguration einer ferngesteuerten Heizregelvorrichtung nach Anspruch 9 oder 10, **dadurch gekennzeichnet, dass** die Anschlussvorrichtung (23) der Fernsteuervorrichtung (20) den Anschluss der Fernsteuervorrichtung (20) alternativ an das Kommunikationsmittel (12) oder an das Verstärkermittel (30, 40) erlaubt.

12. Verfahren zur Konfiguration einer ferngesteuerten Heizregelvorrichtung nach einem der Ansprüche 9 bis 11, **dadurch gekennzeichnet, dass** die Anschlussvorrichtung (23) der Fernsteuervorrichtung (20) alternativ an ein Anzeigemittel (50) angeschlossen werden kann.

13. Verfahren zur Konfiguration einer ferngesteuerten Heizregelvorrichtung nach Anspruch 1, **dadurch gekennzeichnet, dass** die Anschlussvorrichtung der Heizvorrichtung (10) alternativ an das Anzeigemittel (50) angeschlossen werden kann.

14. Verfahren zur Konfiguration einer ferngesteuerten Heizregelvorrichtung nach Anspruch 13, **dadurch gekennzeichnet, dass** nach der Aufzeichnungsstufe der Identifikationsinformation das Kommunikationsmittel von der Fernsteuervorrichtung (20) gelöst und dann an die Heizvorrichtung (10) angeschlossen wird, während das Anzeigemittel (50) von der Heizvorrichtung (10) gelöst und dann an die Fernsteuervorrichtung (20) angeschlossen wird.

15. Verfahren zur Konfiguration einer ferngesteuerten Heizregelvorrichtung nach einem der vorangehenden Ansprüche, **dadurch gekennzeichnet, dass** die Heizvorrichtung (10) ein elektronisch gesteuerter Dampfkessel und die Fernsteuervorrichtung (20) ein programmierbarer Thermostat ist.
